(19) **Europäisches Patentamt**
**European Patent Office**
**Office européen des brevets**

(11) **EP 4 659 927 A1**

(12) **EUROPEAN PATENT APPLICATION**
published in accordance with Art. 153(4) EPC

(43) Date of publication:
**10.12.2025 Bulletin 2025/50**

(21) Application number: **24865821.3**

(22) Date of filing: **11.09.2024**

(51) International Patent Classification (IPC):
**B29B 17/02** $^{(2006.01)}$  **C08J 11/08** $^{(2006.01)}$
**B29B 13/06** $^{(2006.01)}$  **B29K 23/00** $^{(2006.01)}$

(52) Cooperative Patent Classification (CPC):
**B29B 13/06; B29B 17/02; C08J 11/08;**
**B29K 2023/00; Y02W 30/62**

(86) International application number:
**PCT/KR2024/013759**

(87) International publication number:
**WO 2025/058382 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.09.2023 KR 20230120448**
**10.09.2024 KR 20240123330**

(71) Applicant: **LG CHEM, LTD.**
**Seoul 07336 (KR)**

(72) Inventors:
• **LIM, Chi Hoon**
**Daejeon 34122 (KR)**
• **CHOI, Wonjong**
**Daejeon 34122 (KR)**
• **PARK, Jonggun**
**Daejeon 34122 (KR)**
• **LEE, Mi Reu**
**Daejeon 34122 (KR)**
• **LEE, Jungue**
**Daejeon 34122 (KR)**

(74) Representative: **Hoffmann Eitle**
**Patent- und Rechtsanwälte PartmbB**
**Arabellastraße 30**
**81925 München (DE)**

(54) **PREPARATION METHOD OF RECYCLED PLASTIC**

(57)    The present disclosure relates to a preparation method of recycled plastic that recycles waste plastic in an environmentally friendly manner and in superior quality.

EP 4 659 927 A1

**EP 4 659 927 A1**

**Description**

**[TECHNICAL FIELD]**

Cross-Reference to Related Application(s)

This application claims priority to and the benefit of Korean Patent Application No. 10-2023-0120448, filed on September 11, 2023, with the Korean Intellectual Property Office, the disclosure of which is incorporated herein by reference in its entirety.

The present disclosure relates to a preparation method of recycled plastic.

**[BACKGROUND]**

As environmental issues and resource depletion issues are becoming more serious due to the large-scale use and disposal of plastic products, policies and regulations on environmental issues such as climate change and carbon neutrality are being strengthened worldwide. Thus, as the development of environmentally friendly substances is required, research into methods for recycling waste plastics is being conducted.

Presently, most of waste plastics are disposed by landfilling or incineration, and they are not biodegraded during landfilling, and hazardous substances and carbon dioxide are discharged during incineration, which has a negative impact on the environment. Thus, among the above waste plastic recycling methods, interest is growing in PCR (Post-Consumer Recycled Material), which recycles waste plastics that are routinely discarded by consumers after use and produces products.

Generally, the following methods are available for recycling waste plastics. First, there may be mentioned a method of using waste plastic for the same purpose as before disposal without a separate heat treatment process, or a method of recycling waste plastic through processes such as re-extrusion/reprocessing without changing the chemical composition, or a method of recycling waste plastics through processes such as re-extrusion/re-processing without changing chemical components, or a method of chemically decomposing the existing polymer components of waste plastics to recover them as raw materials, or a method of using waste plastic as a heat source, or the like.

Among these, the method of re-extruding/re-processing waste plastic has the advantage of having a low consumption of heat energy and thus a large carbon reduction effect, but there is a problem that it is difficult to remove foreign substances during recycling and thus the quality is lower than that of virgin materials, making it difficult to ensure uniformity of quality. In particular, if the foreign substances are present in waste plastic, there is a problem that the recycled plastic has a poor color, which reduces the utilization value of the recycled waste plastic.

Therefore, in order to solve the above problems, further research is needed in order to develop a method for recycling waste plastic that is low in energy consumption and has superior quality without changing chemical components.

**[DETAILED DESCRIPTION OF THE INVENTION]**

**[Technical Problem]**

It is an object of the present disclosure to provide a preparation method of recycled plastic having superior quality while being environmentally friendly.

**[Technical Solution]**

In order to achieve the above object, provided herein is a preparation method of recycled plastic, comprising:

(step 1) preparing waste plastic containing 50 wt.% or more of LLDPE (linear low density polyethylene);
(step 2) dissolving the waste plastic in a solvent to prepare a dissolved substance;
(step 3) filtering the dissolved substance through a filter to prepare a filtrate;
(step 4) crystallizing the filtrate to separate a solvent and a polymer component containing LLDPE; and
(step 5) drying the polymer component,
wherein the solvent comprises at least one selected from the group consisting of anisole, ethyl benzoate, and butyl benzoate.

Also provided herein is a recycled plastic prepared by the preparation method of the present disclosure.

As used herein, the terms "a first," "a second," etc. are used herein to explain various constitutional elements, and these terms are used only to distinguish one constitutional element from another constitutional element.

2

The technical terms used herein is only to explain exemplary embodiments and is not intended to limit the scope of the present disclosure.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Also, as used herein, in case a layer or an element is mentioned to be formed "on" or "above" layers or elements, it means that the layer or element is directly formed on the layers or elements, or it means that other layers or elements may be additionally formed between the layers, on a subject, or on a substrate.

Although the present disclosure may have various forms and various modifications may be made thereto, specific examples will be exemplified and explained in detail below. However, it is not intended to limit the present disclosure to specific disclosure, and it should be understood that the present disclosure includes all the modifications, equivalents or replacements thereof without departing from the spirit and technical scope of the present disclosure.

As used herein, the term 'recycled plastic' means PCR (Post consumer recycled) material.

Below, the present disclosure will be described in detail.

A preparation method of recycled plastic according to the present disclosure comprises: (step 1) preparing waste plastic containing 50 wt.% or more of LLDPE (linear low density polyethylene); (step 2) dissolving the waste plastic in a solvent to prepare a dissolved substance; (step 3) filtering the dissolved substance through a filter to prepare a filtrate; (step 4) crystallizing the filtrate to separate a solvent and a polymer component containing LLDPE; and (step 5) drying the polymer component, wherein the solvent includes at least one selected from the group consisting of anisole, ethyl benzoate, and butyl benzoate.

LLDPE is flexible and has suitable impact resistance and processability, and thus is widely used alone or in mixtures with other resins for applications such as packaging materials, shrinkable films, and agricultural films. Conventionally, toluene, xylene, and heptane were generally used as solvents for dissolving waste plastics containing LLDPE, however, due to the high viscosity of waste plastics, it is necessary to use an excessive amount of organic solvent during the progress of the process. However, when these solvents are used in excessive amounts, they have the drawback of being harmful to the human body and the environment, and thus being not suitable for application in the development of recycled plastic, and there was a need to solve this problem.

The present inventors have conducted research to develop a recycling method that is environmentally friendly without deterioration of quality in the preparation method of recycled plastic through the recycling of waste plastic, and continued to search for a solvent that is harmless to the human body and environmentally friendly. The result of the toxicity assessment of various organic solvents showed that, representatively, in relation to the toxicity of xylene, n-heptane and toluene in addition to anisole, ethyl benzoate and butyl benzoate, which are solvents used in the present disclosure, anisole, etc. do not fall under compounds harmful to the human body under the Occupational Safety and Health Act or the Chemical Substances Control Act, whereas solvents such as xylene, n-heptane and toluene belong to hazardous substances subject to control, substances subject to work environment measurement, and substances subject to special health examination under the Occupational Safety and Health Act, and belong to toxic substances and/or substances prepared for accidents under the Chemical Substances Control Act, and unlike the xylene, n-heptane and toluene, anisole, ethyl benzoate and butyl benzoate are not separate work environment exposure limit-producing substances according to domestic regulations and the limit-producing substances according to US ACGIH regulations, which have the advantage of being environmentally friendly and having low human toxicity.

Meanwhile, the inventors have noticed that in the method of preparing recycled plastic through the recycling of waste plastic through dissolution, generally, it is not easy to remove foreign substances remaining in the waste plastic. If such foreign substances remain in the recycled plastic, it causes a deterioration in the quality of the recycled plastic, especially in terms of color, and its utilization is limited. In this regard, research was continued to effectively remove the foreign substances while being environmentally friendly, thereby improving the color of the recycled plastic.

After such a research, the present inventors have confirmed that in the case of waste plastics, especially waste plastics containing LLDPE, anisole, ethyl benzoate and butyl benzoate were used as solvents and the solubility during dissolution is excellent, and that through the process comprising filtering the dissolved substance through a filter and then isolating it through crystallization of anisole, it is environmentally friendly while being relatively low in energy consumption, the color of the recycled plastic after recycling is significantly improved, and the solvent used can be reused, and completed the present disclosure.

Each step is explained in detail below.

**(Step 1)**

The step 1 of the present disclosure is a step of preparing waste plastic feed containing LLDPE.

LLDPE is an abbreviation for linear low density polyethylene, and has a general density range of LLDPE, for example, a density of 0.912 to 0.925 g/cm$^3$, and may be a copolymer of ethylene and an alpha olefin having 3 or more carbon atoms, such as a copolymer of ethylene and 1-hexene. In the present disclosure, recycled plastic(PCR) containing 50 wt.% or more of the LLDPE is used as the recycled plastic.

Waste plastics are generally prepared into recycled plastics through a series of processes of crushing, washing, drying and extrusion. Waste plastics containing LLDPE, which is a raw material used in the present disclosure, refer to waste plastics in post-drying stage and pre-extrusion stage after the crushing, washing and drying steps. As an example, waste plastics applicable to the present disclosure may include SS0618, which is an LLDPE product supplied and recycled by S&S Recycling Inc.

Meanwhile, according to an embodiment of the present disclosure, the waste plastic in the step 1 may contain 80 wt.% or more, 90 wt.% or more, or 95 wt.% or more of LLDPE. When LLDPE is contained in the above range, it becomes easy to remove foreign substances when applying the dissolving, filtering and crystallization steps described below, and it is expected that the desired effect of improving color can be achieved.

**(Step 2)**

The step 1 of the present disclosure is a step of dissolving the waste plastic feed in a solvent to prepare a dissolved substance. At this time, the solvent includes at least one selected from the group consisting of anisole, ethyl benzoate, and butyl benzoate. It has been confirmed that the waste plastic containing LLDPE of the present disclosure has high solubility in the solvent such as anisole, ethyl benzoate, butyl benzoate, etc., and this is expected to be due to the similarity between the intermolecular interaction of the waste plastic containing LLDPE and the intermolecular interaction of the solvent.

Based on the characteristics of the waste plastic and the solvent as described above, the waste plastic containing LLDPE prepared in the step 1 of the present disclosure can be completely dissolved in the solvent to prepare a dissolved substance.

According to an embodiment of the present disclosure, the solvent in the step 2 may be used in an amount of 100 to 10,000 parts by weight based on 100 parts by weight of the waste plastic. By using anisole in the above range, the concentration of the waste plastic is appropriately adjusted while completely dissolving the waste plastic, thereby reducing the load in the filtration process described below. Preferably, the solvent may be used in an amount of 300 parts by weight or more, 500 parts by weight or more, 700 parts by weight or more, or 1,000 parts by weight or more, and 95,000 parts by weight or less, or 90,000 parts by weight or less based on 100 parts by weight of the waste plastic.

According to an embodiment of the present disclosure, the step 2 may be carried out under a temperature condition of 90 to 153°C. The temperature range may be appropriately adjusted in consideration of the increase in solubility of waste plastic according to temperature and the boiling point of anisole. Preferably, the step 2 may be carried out at a temperature of 95°C or more, 100°C or more, 110°C or more, 120°C or more, 125°C or more, 130°C or more, 135°C or more, or 140°C or more, and 150°C or less.

Meanwhile, the means for dissolving the waste plastic containing LLDPE in the solvent is not particularly limited, and as an example, it may be carried out in a batch reactor equipped with a stirrer.

**(Step 3)**

Step 3 of the present disclosure is a step of dissolving waste plastic containing LLDPE in a solvent and filtering the dissolved substance through a filter to prepare a filtrate.

As described above, the present invention simultaneously includes a step of dissolving a waste plastic solution containing LLDPE in a solvent and a step of filtering the dissolved substance, thereby capable of easily removing foreign substances not dissolved in the solvent. Specifically, LLDPE is solid at room temperature, and melts at high temperatures, but has high viscosity, which can cause problems such as filter damage due to pressure increase and deterioration of process stability when passing through a filter with a small pore size. Therefore, if LLDPE is dissolved in an environmentally friendly solvent to reduce the viscosity, the above-mentioned problems do not occur even through a filter with a small pore size, so that foreign substances remaining in the waste plastic can be efficiently removed.

According to an embodiment of the present disclosure, the filter of the step 3 may have a pore size of 1 $\mu$m to 150 $\mu$m. By using a filter in the above range, it is easy to filter the dissolved substance, reduces the load of the filtration step, is advantageous in terms of process speed, and balances the quality of the recycled plastic. Preferably, the filter of the step 3 may be 2 $\mu$m or more, 3 $\mu$m or more, 4 $\mu$m or more, or 5 $\mu$m or more, and 120 $\mu$m or less, 100 $\mu$m or less, or 80 $\mu$m or less.

As an example, the filter of the step 3 may be any one of a metal filter of 100 mesh to 800 mesh according to the KS-A-5101 standard and a filter paper having a pore size of 1 $\mu$m to 30 $\mu$m. Generally, a metal filter (mesh filter) is a two-dimensional woven structure made from a metal material, and has excellent durability and thus can withstand high pressure, but there is a limit to reducing the size of the filter pores for filtering fine particles. Filter paper generally has a three-dimensional woven structure in which cellulose is randomly arranged, and may be reduced in durability depending on the material applied, but the pore size can be further reduced compared to a metal filter (mesh filter), which is advantageous for removing fine foreign substances and has excellent color improving effects. In consideration of the color improving effects and the process speed as described above, the metal filter may be a metal filter of 150 mesh to 600 mesh, or 170 mesh to 550 mesh, or 200 mesh to 500 mesh according to the KS-A-5101 standard, and a filter paper having a pore size of 3 $\mu$m to 27 $\mu$m, or 5 $\mu$m to 25 $\mu$m can be used.

Meanwhile, the filtration step may be carried out under normal pressure, and a filtration device equipped with or connected to a vacuum pump may be used to improve the filtration speed. When a vacuum pump is used, the filtration step may be carried out under a pressure of about 120 to 200 mmbar, 140 to 180 mmbar, or 160 mmbar.

**(Step 4)**

Step 4 of the present disclosure is a step of crystallizing the filtrate prepared through the filtration step to separate a solvent anisole and a polymer component containing LLDPE.

The present disclosure introduces a crystallization step instead of a purification step such as distillation, and can efficiently remove foreign substances while reducing energy consumption.

According to an embodiment of the present disclosure, the crystallization of the step 4 may be carried out under a temperature condition of 15 to 70°C. Considering the solubility of the solvent used in the step 2 described above and the waste plastic containing LLDPE, crystallization is carried out by cooling to a temperature in the above range. Preferably, the crystallization step may be carried out at a temperature of 15°C or more, 35°C or more, or 50°C or more, and 65°C or less, 60°C or less, or 55°C or less.

**(Step 5)**

The polymer component containing LLDPE obtained after going through the step 4 is mixed with a solvent and exists in the form of a gel. As an example, the solvent may be contained in an amount of 500 to 2,000 parts by weight based on 100 parts by weight of the polymer component. Thus, the step 5 of the present disclosure is a step of drying the polymer component containing LLDPE obtained through the crystallization, and the solvent remaining in the polymer component can be removed through this step.

According to an embodiment of the present disclosure, the drying of the step 5 may be carried out under a temperature condition of 50 to 100°C. By carrying out the drying step at a temperature within the above range, thermal deformation of the polymer component can be prevented and the solvent used can be appropriately removed. Preferably, the drying temperature may be 55°C or more, 60°C or more, 65°C or more, or 70°C or more, and 95°C or less, 90°C or less, or 85°C or less.

Further, the drying step can be appropriately adjusted by measuring the amount of the solvent used or the amount of the solvent remaining in the polymer component after crystallization. As an example, the drying step may be carried out for 5 to 50 hours, 10 to 30 hours, or 15 to 20 hours.

The above-described method for preparing recycled plastic of the present disclosure can provide recycled plastic that has excellent color quality while being environmentally friendly.

According to an embodiment of the present disclosure, the color difference($\triangle$E) calculated based on L, a, and b measured by a spectrophotometer before and after recycling may be 1 to 20. The color difference($\triangle$E) can be calculated according to the following Equation 1.

$$[\text{Equation 1}] \quad \triangle E = \{(L1-L2)^2+(a1-a2)^2+(b1-b2)^2\}^{1/2}$$

in Equation 1,

L1, a1, and b1 respectively mean the L, a, and b values in the CIELAB color coordinates of waste plastic containing LLDPE before recycling, and
L2, a2, and b2 respectively mean the L, a, and b values in the CIELAB color coordinates of recycled plastic containing LLDPE after recycling.

Specifically, in the CIELAB color coordinates, L represents brightness, a represents the degree of red and green, and b represents the degree of yellow and blue.

That is, in Equation 1, L1, a1, and b1 are the values measured from recycled plastic containing LLDPE before recycling, and L2, a2, and b2 are the values measured from recycled plastic containing LLDPE obtained after going through the recycling of the steps 1 to 5 of the present disclosure.

When the color difference($\triangle$E) is 1 or less, it is generally considered that there is no color difference, and it can be determined that the higher the color difference($\triangle$E) value, the more the color difference exists. When the color difference($\triangle$E) value increases compared to the existing color value, for example, when the L value increases and the a/b value converges to 0, it can be confirmed that the recycled plastic is getting closer to the color of the virgin plastic, i.e., white, According to the method for preparing recycled plastic of the present disclosure, it can be confirmed that foreign substances are effectively removed and the color quality is excellent.

Preferably, the color difference($\triangle$E) may be 1.5 or more, 2 or more, or 3 or more, and 19.5 or less, 19 or less, or 18.5 or less. In the case of indicating the color difference within the above range, it can be confirmed that foreign substances are effectively removed according to the method for preparing recycled plastic of the present disclosure, resulting in excellent color quality. Specifically, the recycled plastic prepared according to the method for preparing recycled plastic of the present disclosure has an increased L value and a brighter color compared to the waste plastic before recycling, and the a and b values show values that are closer to 0 after recycling than before recycling, resulting in excellent color quality. The L value of the recycled plastic prepared according to the method for preparing recycled plastic of the present disclosure increases by about 1% or more, about 2% or more, about 3% or more, about 5% or more, about 10% or more, about 15% or more, or about 20% or more compared to that of the waste plastic. In addition, the absolute value reduction rate of the a value of the recycled plastic prepared according to the preparation method of the present disclosure compared to the waste plastic was 5% or more, 9% or more, 12% or more, or 60% or more, and the absolute value reduction rate of the b value was 5% or more, 7% or more, 10% or more, 15% or more, or 45% or more. At this time, the absolute value reduction rate of the a value is calculated by the following Calculation Formula A, and the absolute value reduction rate of the b value is calculated by the following Calculation Formula B.

[Calculation Formula A]

$$\text{Absolute reduction rate of a value} = [(|a1|-|a2|) / (|a1|)] * 100$$

wherein,

a1 means the a value in the CIELAB color coordinates of the waste plastic containing LLDPE before recycling,
a2 means the a value in the CIELAB color coordinates of the recycled plastic containing LLDPE after recycling.

[Calculation Formula B]

$$\text{Absolute value reduction rate of b value} = [(\ |\ b1\ |\ -\ |\ b2\ |\ ) / (\ |\ b1\ |\ )] * 100$$

wherein,
b1 means the b value in the CIELAB color coordinate of the waste plastic containing LLDPE before recycling, and
b2 means the b value in the CIELAB color coordinate of the recycled plastic containing LLDPE after recycling.

In addition, the present disclosure provides a recycled plastic prepared according to the preparation method of the present disclosure described above.

According to an embodiment of the present disclosure, the recycled plastic may have a color difference($\triangle$E) of 1 to 20 calculated based on L, a, and b measured by a spectrophotometer before and after recycling. For the meaning of the L, a, and b values, the calculation method of the color difference($\triangle$E), and the preferred range, refer to the above explanation.

According to an embodiment of the present disclosure, the recycled plastic may have a residual solvent content of 200 ppm or less. Preferably, the recycled plastic according to the present disclosure may have a residual solvent content of 170 ppm or less, 150 ppm or less, 130 ppm or less, 100 ppm or less, 90 ppm or less, 80 ppm or less, or 70 ppm or less. Meanwhile, the lower limit value of the residual solvent content may theoretically be 0, but may be, for example, 1 ppm or more, 2 ppm or more, 5 ppm or more, 7 ppm or more, or 10 ppm or more.

The recycled plastics described above may be used for applications such as packaging materials, shrinkable films, and agricultural films, similar to virgin plastics.

**[Advantageous Effects]**

As described above, the preparation method of the recycled plastic of the present disclosure can provide recycled plastics having excellent color quality while being environmentally friendly.

**[DETAILED DESCRIPTION OF THE EMBODIMENTS]**

Hereinafter, preferred examples are presented to help understanding of the invention. However, the following examples are given here for illustrative purposes only and are by no means intended to limit the scope of the present disclosure.

**[Example]**

**Comparative Example 1**

Waste plastic (post-drying stage and pre-extrusion stage of raw materials, (S&S Recycling Inc., SS0618) composed of 100 wt.% LLDPE) was used.

**Comparative Example 2**

10 g of waste plastic (post-drying stage and the pre-extrusion stage of raw materials, (S&S Recycling Inc., SS0618) composed of 100 wt.% LLDPE) and 900 g of anisole were placed in a 1L reactor and stirred at 150°C and 200 RPM for about 10 minutes. After confirming that LLDPE was completely dissolved in anisole, the temperature was lowered to 50°C, and the polymer component containing LLDPE was separated from anisole through recrystallization. After recrystallization, the polymer component containing LLDPE in a gel state was dried in an oven at 80°C for 17 hours to prepare a regenerated recycled plastic.

**Example 1**

10 g of waste plastic (post-drying stage and pre-extrusion stage of raw materials, (S&S Recycling Inc., SS0618) composed of 100 wt.% LLDPE) and 900 g of anisole were placed in a 1L reactor and stirred at 150°C and 200 RPM for about 10 minutes. After confirming that LLDPE was completely dissolved in anisole and the dissolved substance was prepared, it was filtered using a 200 mesh metal filter (filter size: 74 $\mu$m). During the filtering process, a vacuum pump (160 mmbar, ABS) was used to facilitate filtering.

After filtration, the filtrate was lowered to 50°C, and the polymer component containing LLDPE was separated from the anisole through recrystallization. After recrystallization, the polymer component containing LLDPE in a gel state was dried in an oven at 80°C for 17 hours to prepare a recycled plastic.

**Example 2**

A recycled plastic was prepared in the same manner as in Example 1, except that in the filtering process of Example 1, a 325 mesh filter (filter size: 43 $\mu$m) was used instead of a 200 mesh metal filter.

**Example 3**

A recycled plastic was prepared in the same manner as in Example 1, except that in the filtering process of Example 1, a 500 mesh filter (filter size: 28 $\mu$m) was used instead of a 200 mesh metal filter.

**Example 4**

A recycled plastic was prepared in the same manner as in Example 1, except that in the filtering process of Example 1, a filter paper having a pore size of 20 to 25 $\mu$m was used instead of a 200 mesh metal filter.

**Example 5**

A recycled plastic was prepared in the same manner as in Example 1, except that in the filtering process of Example 1, a filter paper having a pore size of 5 $\mu$m was used instead of a 200 mesh metal filter.

**Example 6**

A recycled plastic was prepared in the same manner as in Example 5, except that in Example 5, 700 g of anisole was used instead of 900 g of anisole.

**Example 7**

A recycled plastic was prepared in the same manner as in Example 5, except that in Example 5, 500 g of anisole was used instead of 900 g of anisole.

**Example 8**

A recycled plastic was prepared in the same manner as in Example 3, except that in Example 3, 200 g of anisole was used instead of 900 g of anisole.

**Example 9**

A recycled plastic was prepared in the same manner as in Example 5, except that in Example 5, the polymer component containing LLDPE was separated from anisole through recrystallization, and the resulting anisole was used as a solvent (a solvent recycled once).

**Example 10**

A recycled plastic was prepared in the same manner as in Example 6, except that in Example 9, the polymer component containing LLDPE was separated from anisole through recrystallization, and the resulting anisole was used as a solvent (a solvent recycled twice).

**Example 11**

A recycled plastic was prepared in the same manner as in Example 5, except that in Example 5, 300 g of ethyl benzoate was used instead of 900 g of anisole.

**[Experimental Example]**

(1) Color Value Measurement

Preparation of Specimen

The recycled plastics prepared in Examples and Comparative Examples were pressed using a hot press at 200°C, 0 bar for 1.5 minutes, 10 bar for 0.5 minutes, and 40 bar for 3 minutes to prepare 2T-thick specimens.

Color index measurement

The color index was measured by photographing the specimens prepared in the device using the X-rite CCM (Computer Color Matching) System and then deriving the corresponding L/a/b values.
Specifically, the L1, L2, a1, a2, b1, and b2 values were measured from the prepared specimens at room temperature using an X-rite spectrophotometer, and the $\triangle E$ value was calculated according to Equation 1 below.

$$[\text{Equation 1}]$$

$$\triangle E = \{(L1\text{-}L2)^2+(a1\text{-}a2)^2+(b1\text{-}b2)^2\}^{1/2}$$

in Equation 1,

L1, a1, and b1 respectively mean the L, a, and b values in the CIELAB color coordinates of waste plastic containing LLDPE before recycling, and
L2, a2, and b2 respectively mean the L, a, and b values in the CIELAB color coordinates of recycled plastic containing LLDPE after recycling.

Specifically, the L, a, and b values of the recycled plastic before recycling were measured to be L1 of 57.8, a1 of 2.1, and b1 of 12.2, respectively, and based on these values, the L, a, and b values of the recycled plastic specimens of Examples and Preparation Examples, L2, a2, and b2, were measured, and the color difference was calculated according to Equation 1.

(2) Measurement of residual solvent content

The residual solvent content of the samples taken from Examples and Comparative Examples was measured by GC/MS analysis method. Specifically, ionic substances separated through gas chromatography was ionized using the EI (Electron ionization) method, and then the ions were captured in an Orbitrap analyzer. The captured ions rotated around the central electrode at different speeds depending on their molecular weights and moved along the axis. The mass-to-charge(m/z) was obtained from the frequency obtained from the orbiting motion of ions, and the presence or absence and content of the target substance were measured by comparing the m/z values specific to the substance.

<Target substance m/z>

- Anisole: 108

- Ethyl benzoate: 105

[Table 1]

| Category | Color value | | | |
|---|---|---|---|---|
| | L | a | b | △E |
| Comparative Example 1 | 57.8 | 2.1 | 12.2 | Ref |
| Comparative Example 2 | 58.0 | 2.2 | 11.7 | 0.5 |
| Example 1 | 60.7 | 1.9 | 10.1 | 3.6 |
| Example 2 | 60.0 | 1.9 | 9.9 | 3.2 |
| Example 3 | 62.6 | 1.8 | 9.7 | 5.4 |
| Example 4 | 70.9 | 0.7 | 6.5 | 14.4 |
| Example 5 | 74.0 | 0.3 | 5.7 | 17.5 |
| Example 6 | 73.7 | 0.2 | 5.2 | 17.5 |
| Example 7 | 74.7 | 0.1 | 5.5 | 18.0 |
| Example 8 | 61.6 | 1.7 | 11.3 | 3.9 |
| Example 9 | 71.7 | 0.6 | 6.9 | 15.0 |
| Example 10 | 73.7 | 0.2 | 5.2 | 17.5 |
| Example 11 | 70.9 | -0.8 | 12.2 | 13.4 |

[Table 2]

| Category | Residual solvent content (ppm) |
|---|---|
| Comparative Example 1 | - |
| Example 5 | 40 (anisole) |
| Example 10 | 30 (anisole) |
| Example 11 | 10 (ethyl benzoate) |

As can be seen from Table 1 and Table 2, it was confirmed that the method for preparing recycled plastic according to the present disclosure uses an environmentally friendly solvent and thus, is recyclable while having low harmfulness to the human body, is excellent in color properties relative to the prepared waste plastic, and has low residual solvent content.

**Claims**

1. A preparation method of recycled plastic, comprising:

   (step 1) preparing waste plastic containing 50 wt.% or more of LLDPE (linear low density polyethylene);
   (step 2) dissolving the waste plastic in a solvent to prepare a dissolved substance;
   (step 3) filtering the dissolved substance through a filter to prepare a filtrate;
   (step 4) crystallizing the filtrate to separate a solvent and a polymer component containing LLDPE; and
   (step 5) drying the polymer component,
   wherein the solvent comprises at least one selected from the group consisting of anisole, ethyl benzoate, and butyl benzoate.

2. The preparation method of recycled plastic according to claim 1, wherein:
   in the step 1, the waste plastic comprises 80 wt% or more of LLPDE.

3. The preparation method of recycled plastic according to claim 1, wherein:
   in the step 2, the solvent is used in an amount of 100 to 10,000 parts by weight based on 100 parts by weight of the waste plastic.

4. The preparation method of recycled plastic according to claim 1, wherein:
   the step 2 is carried out under a temperature condition of 90 to 153°C.

5. The preparation method of recycled plastic according to claim 1, wherein:
   the filter of the step 3 has a pore size of 1$\mu$m to 150$\mu$m.

6. The preparation method of recycled plastic according to claim 1, wherein:
   the crystallization of the step 4 is carried out under a temperature condition of 15 to 70°C.

7. The preparation method of recycled plastic according to claim 1, wherein:
   the drying of the step 5 is carried out under a temperature condition of 50 to 100°C.

8. The preparation method of recycled plastic according to claim 1, wherein:
   the color difference($\triangle$E) calculated based on L, a, and b measured by a spectrophotometer before and after recycling is 1 to 20.

9. A recycled plastic prepared by the preparation method according to any one of claims 1 to 8.

10. The recycled plastic according to claim 9, wherein:
    the color difference($\triangle$E) calculated based on L, a, and b measured by a spectrophotometer before and after recycling is 1 to 20.

11. The recycled plastic according to claim 9, wherein:
    the residual solvent content is 200 ppm or less.

## INTERNATIONAL SEARCH REPORT

| International application No. |
| --- |
| **PCT/KR2024/013759** |

| A. | CLASSIFICATION OF SUBJECT MATTER |
| --- | --- |

**B29B 17/02**(2006.01)i; **C08J 11/08**(2006.01)i; **B29B 13/06**(2006.01)i; B29K 23/00(2006.01)n

According to International Patent Classification (IPC) or to both national classification and IPC

| B. | FIELDS SEARCHED |
| --- | --- |

Minimum documentation searched (classification system followed by classification symbols)

B29B 17/02(2006.01); B29B 7/00(2006.01); C07C 69/50(2006.01); C08J 11/08(2006.01); C08J 11/10(2006.01); H04N 7/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 선형 저밀도 폴리에틸렌(linear low density polyethylene), 폐플라스틱(waste plastic), 재활용(recycle)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2023-0174736 A1 (WISCONSIN ALUMNI RESEARCH FOUNDATION) 08 June 2023 (2023-06-08) <br> See claims 1-11; and paragraphs [0061] and [0062]. | 1-11 |
| A | KR 10-2023-0062827 A (APK AG) 09 May 2023 (2023-05-09) <br> See claims 1-20. | 1-11 |
| A | KR 10-2023-0046330 A (LG CHEM, LTD.) 06 April 2023 (2023-04-06) <br> See claims 1-15. | 1-11 |
| A | US 11220586 B2 (NOVOLOOP, INC.) 11 January 2022 (2022-01-11) <br> See claims 1-24. | 1-11 |
| A | ACHILIAS, D. S. et al. Chemical recycling of plastic wastes made from polyethylene (LDPE and HDPE) and polypropylene (PP). ScienceDirect. 19 November 2007, vol. 149, no. 3, pp. 536-542. <br> See entire document. | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 December 2024** | **23 December 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013759**

| Patent document cited in search report | | | Publication date (day/month/year) | Patent family member(s) | | | Publication date (day/month/year) |
|---|---|---|---|---|---|---|---|
| US | 2023-0174736 | A1 | 08 June 2023 | CA | 3233547 | A1 | 25 May 2023 |
| | | | | EP | 4434040 | A1 | 25 September 2024 |
| | | | | KR | 10-2024-0112833 | A | 19 July 2024 |
| | | | | WO | 2023-091639 | A1 | 25 May 2023 |
| KR | 10-2023-0062827 | A | 09 May 2023 | CN | 116457109 | A | 18 July 2023 |
| | | | | EP | 4192628 | A1 | 14 June 2023 |
| | | | | EP | 4311842 | A2 | 31 January 2024 |
| | | | | EP | 4311842 | A3 | 08 May 2024 |
| | | | | JP | 2023-536526 | A | 25 August 2023 |
| | | | | US | 2023-0331952 | A1 | 19 October 2023 |
| | | | | WO | 2022-029318 | A1 | 10 February 2022 |
| KR | 10-2023-0046330 | A | 06 April 2023 | None | | | |
| US | 11220586 | B2 | 11 January 2022 | JP | 2021-522401 | A | 30 August 2021 |
| | | | | JP | 2023-123522 | A | 05 September 2023 |
| | | | | US | 11945918 | B2 | 02 April 2024 |
| | | | | US | 2020-0199325 | A1 | 25 June 2020 |
| | | | | US | 2022-0119616 | A1 | 21 April 2022 |

Form PCT/ISA/210 (patent family annex) (July 2022)

## EP 4 659 927 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230120448